(19) **Europäisches Patentamt / European Patent Office / Office européen des brevets**

(11) **EP 2 171 532 B1**

(12) # EUROPÄISCHE PATENTSCHRIFT

(45) Veröffentlichungstag und Bekanntmachung des Hinweises auf die Patenterteilung:
**07.05.2014 Patentblatt 2014/19**

(21) Anmeldenummer: **08773911.6**

(22) Anmeldetag: **08.07.2008**

(51) Int Cl.:
*G02F 1/13357* (2006.01)     *G02B 5/02* (2006.01)
*G02B 27/00* (2006.01)     *G02B 3/00* (2006.01)

(86) Internationale Anmeldenummer:
**PCT/EP2008/005542**

(87) Internationale Veröffentlichungsnummer:
**WO 2009/010207 (22.01.2009 Gazette 2009/04)**

(54) **LICHTLENKENDE OBERFLÄCHENSTRUKTUR**

LIGHT-GUIDING SURFACE STRUCTURE

STRUCTURE SUPERFICIELLE GUIDANT LA LUMIÈRE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **18.07.2007 DE 102007033300**

(43) Veröffentlichungstag der Anmeldung:
**07.04.2010 Patentblatt 2010/14**

(73) Patentinhaber: **Bayer Intellectual Property GmbH 40789 Monheim (DE)**

(72) Erfinder:
- **WALZE, Günther**
  **110 Taipei, R.O.C. (TW)**
- **STOLLWERCK, Gunther**
  **47802 Krefeld (DE)**

- **HAESE, Wilfried**
  **51519 Odenthal (DE)**

(74) Vertreter: **BIP Patents**
**c/o Bayer Intellectual Property GmbH**
**Creative Campus Monheim**
**Alfred-Nobel-Straße 10**
**40789 Monheim (DE)**

(56) Entgegenhaltungen:
| | |
|---|---|
| WO-A-95/14255 | WO-A-2005/121850 |
| WO-A-2006/006558 | WO-A-2006/010245 |
| WO-A-2007/002317 | US-A- 4 875 064 |
| US-A1- 2004 196 561 | US-A1- 2005 185 416 |
| US-A1- 2006 145 374 | |

**Beschreibung**

Die vorliegende Erfindung betrifft eine mehrschichtige, oberflächlich strukturierte Massivplatte oder Diffuserfolie zur Lichtlenkung, deren Basismaterial aus einem transparenten Kunststoff, und gegebenenfalls einer oder mehrerer Deckschichten besteht.

Bei der Verwendung von Diffuserplatten in den so genannten Backlight-Units (BLUs) von Flachbildschirmen kommt es auf eine sehr hohe und homogene Leuchtdichte des Gesamtsystems an, damit die Helligkeit des Bildes des Flachbildschirmes möglichst hoch ist. Grundsätzlich weist eine Backlight-Unit (Direct Light System) den nachfolgend beschriebenen Aufbau auf. Sie besteht in der Regel aus einem Gehäuse, in dem je nach Größe der Backlight-Unit eine unterschiedliche Anzahl an Leuchtstoffröhren, so genannte CCFL (Cold Cathode Fluorescent Lamp) meist parallel zueinander angeordnet sind. Die Gehäuseinnenseite ist mit einer weiß diffus lichtreflektierenden Oberfläche ausgestattet. In Einzelfällen kommen auch andere Lichtquellen zum Einsatz (LED's), was den prinzipiellen Aufbau jedoch nicht weiter beeinflusst. Auf diesem Beleuchtungssystem liegt die Diffuserplatte auf, die eine Dicke von 1 bis 3 mm aufweist, bevorzugt eine Dicke von 1.5 mm - 2.0mm. Auf der Diffuserplatte befindet sich ein Satz von Folien, die folgende Funktionen haben können: Umverteilung und Fokussierung des Lichtes in Vorwärtsrichtung und Homogenisierung (Diffuserfolien), Umverteilung und Fokussierung des Lichtes in Vorwärtsrichtung durch prismatisch strukturierte Folien, z.B. den so genannten BEF (Brightness Enhancing Film), zusätzlich zu einer Prismenfolie oft eine weitere Diffusorfolie zur Vermeidung von Moire-Effekten, Reflexionspolarisatoren z.B. DBEF (Dual Brightness Enhancement Film) und Linearpolarisatoren. Die linear polarisierende Folie liegt direkt unter dem darüber befindlichen LCD-Display.

Aus dem Stand der Technik sind lichtstreuende transluzente Erzeugnisse aus Polycarbonat mit verschiedenen lichtstreuenden Zusatzstoffen und daraus hergestellte Formteile bereits bekannt.

So offenbart beispielsweise EP-A 634 445 lichtstreuende Zusammensetzungen, welche polymere Partikel auf Vinyl-Acrylat-Basis mit einer Kern/Schale Morphologie in Kombination mit $TiO_2$ enthalten.

Die Verwendung von lichtstreuenden Polycarbonatfolien in Flachbildschirmen ist in US 2004/0066645 beschrieben. Als lichtstreuende Pigmente werden hier Polyacrylate, PMMA, Polytetrafluoroethylene, Polyalkyltrialkoxysiloxane und Mischungen aus diesen Komponenten genannt.

In DE 10 2005 039 413 werden PC-Diffuserplatten beschrieben, die 0,01% bis 20% Streupigment enthalten.

Alle diese Diffuserplatten weisen aber eine Transmission von 50%-70%, während unadditiviertes Polycarbonat eine Lichttransmission von 90% hat. Die Transmission hat einen entscheidenden Einfluss auf die erreichbare Helligkeit.

Um die Eignung der lichtstreuenden Platten für so genannte Backlight-Units für LCD-Flachbildschirme zu beurteilen, muss insbesondere die Helligkeit (Brightness) des Gesamtsystems betrachtet werden, also der gesamten BLU inklusive Foliensatz, nicht nur der Diffuserplatten für sich. Bei Diffuserplatten sind möglichst hohe Homogenität der Lichtverteilung bei maximaler Helligkeit (Brightness) gefordert. Beides sind erwünschte aber im Falle herkömmlicher Diffuserplatten in der Regel gegenläufige Eigenschaften.

Eine Homogenisierung mittels Oberflächenstrukturen wie in JP 2006/284697 oder US 2006/10262666 hat den Vorteil einer hohen Transmission und damit eine großen Helligkeit (Brightness). Als Strukturtyp liegen hierbei einfache tonnen- oder prismenartige Stege oder eine Kombination derselben zugrunde, die unter Umständen leichte Variationen wie Einkerbungen enthalten. Mathematisch lassen sich diese Strukturen oft über Ellipsenabschnitte beschreiben und werden in diesem Fall in der Regel als Lenticularstrukturen bezeichnet. Die erreichbare Homogenität ist begrenzt und geringer als die erreichbare Homogenität herkömmlicher Diffuserplatten. Die Struktur weitet das direkte Bild der Lampen auf. Ohne an die Theorie gebunden zu sein, werden die Leuchtdichtemaxima über den Lampen verbreitert, bleiben in ihrer Position jedoch unverändert. Zwischen den Lampen entsteht ein Minimum. Dies führt für große Lampenabstände bei wenigen Lampen zu einem inhomogenen Erscheinungsbild. Um für anspruchsvolle BLU-Aufbauten (größere Lampenabstände, geringe Gesamthöhe) eine ausreichende Homogenität zu erzielen, werden oft aufwändige Mehrschichtaufbauten vorgeschlagen.

In CN 1924620 werden lichtlenkende Strukturen in Kunststoff mit Streuadditiv beschrieben, die aus abgeschnittenen Prismen bestehen. Diese Strukturen sollen 3 klare Abbilder der Lampen erzeugen und durch das zusätzlich auch innerhalb der Struktur eingesetzte Streuadditiv verbreitert werden, um so eine homogene Hinterleuchtung zu ermöglichen. In dieser Konstellation stört das eingesetzte Streuadditiv allerdings die lichtlenkende Wirkung der Struktur, so dass letztlich keine homogene Hinterleuchtung erreicht werden kann.

In US 2007047260 und US 2006250819 werden Compound Parabolic Concentrators auf Streuplatten für Backlight-Units beschrieben. Diese sind jedoch nicht linear angeordnet sondern rund, vier- oder mehreckig. Außerdem dienen die CPCs hier nur der Brightnesserhöhung und nicht der Homogenisierung des Lichtes von mehreren CCFLs.

Eine Aufgabe gegenüber diesem Stand der Technik ist es, eine Oberflächenstruktur für Diffuserplatten und Diffuserfolien bereitzustellen, die eine verbesserte Homogenisierung der Lichtverteilung bei gleichzeitig hoher Lichttransmission aufweist.

Die vorliegende Erfindung betrifft daher eine Diffuserplatte oder Diffuserfolie zur Verwendung in einer Backlight-Unit, aufweisend eine Vorderseite mit im Wesentlichen translationsinvarianten lichtlenkenden Strukturen und eine Rückseite, wobei die Rückseite dafür vorgesehen ist, einer Lichtquelle zugewandt und die Vorderseite einer Lichtquelle abgewandt positioniert zu sein, dadurch gekennzeichnet, dass die lichtlenkenden Strukturen im Querschnitt bestehen aus

- einem konvexen CPC-Bereich, bestehend aus einem ersten und zweiten Parabelast, jeweils mit einem oberen und einem unteren Endpunkt, wobei die unteren Endpunkte näher zur Rückseite liegen,
- einer Struktur zwischen den oberen Endpunkten des CPC- Bereiches, die den CPC Abschluss bildet und die sich durch eine polynomische Funktion vierter Ordnung, die in den beiden oberen Endpunkten stetig differenzierbar ist, beschreiben lässt, und
- einen sinusoidalen, elliptischen, kreisförmigen oder kreisbogenausschnittförmigen Linsenbereich, der sich an einem der unteren Endpunkte anschließt

Im Rahmen der vorliegenden Erfindung beschreiben die Ausdrücke "Vorderseite" und "Rückseite" die beiden großen gegenüberliegenden Oberflächen des flächenhaften Formkörpers. Die Vorderseite ist von der Lichtquelle abgewandt und die Rückseite der Lichtquelle zugewandt.

Im Rahmen der vorliegenden Erfindung bedeutet der Ausdruck "konvexer CPC-Bereich", dass der breitere Teil des CPC's in Richtung Rückseite zeigt.

Im Rahmen der vorliegenden Erfindung bedeutet der Ausdruck "translationsinvariant", dass die Struktur über die Oberfläche in einer Richtung keine oder zumindest keine signifikante oder nachträgliche Variation zeigt, während sie in einer Richtung senkrecht dazu eine Form von länglichen Erhöhungen und Senken aufweist, d.h. eine Rillenstruktur darstellt.

Im Rahmen der vorliegenden Erfindung bedeutet der Ausdruck "übermoduliert", dass eine Struktur entlang der translationsinvarianten Richtung, d.h. entlang der Rillenstruktur eine zusätzliche Variation aufweist, die unabhängig von der Variation quer zur Rillenstruktur ist. Mathematisch betrachtet bildet die effektive Oberflächenstruktur eine Addition der Rillenstruktur mit einer davon unabhängigen im Weiteren als übermoduliert bezeichneten Struktur. Diese übermodulierte Struktur kann ein sinusoidale Funktion sein, eine zufällige Streustruktur oder eine beliebige andere Funktion.

Im Rahmen der vorliegenden Erfindung bedeutet der Ausdruck "Linsenbereich", dass ein Teil der lichtlenkenden Struktur sich mathematisch durch eine linsenartige Funktion beschreiben lässt.

Im Rahmen der vorliegenden Erfindung bedeutet der Ausdruck "CPC-Bereich", dass ein Teil der lichtlenkenden Struktur sich mathematisch durch eine CPC-Funktion beschreiben lässt.

Im Rahmen der vorliegenden Erfindung bedeutet der Ausdruck "identisch", dass alle Linsenbereiche eine identische Form aufweisen und alle CPC Bereiche eine identische Form aufweisen, d.h. durch die gleichen Parameter beschrieben werden können.

Im Rahmen der vorliegenden Erfindung bedeutet der Ausdruck "abhängig", dass benachbarte Linsenbereiche bzw. CPC-Bereiche eine Form aufweisen, die zwar unterschiedlich sein kann, jedoch durch den jeweils benachbarten Bereich vorgegeben ist, also von diesem abhängig ist. Mit diesem Ausdruck werden Strukturen beschrieben, die insgesamt unterschiedliche Formen aufweisen, aber dennoch periodisch wandelbar sind.

Im Rahmen der vorliegenden Erfindung bedeutet der Ausdruck "unabhängig", dass benachbarte Linsenbereiche bzw. CPC-Bereiche eine Form aufweisen, deren beschreibende Parameter gänzlich unabhängig voneinander sind. Jede der einzelnen Strukturen kann dabei eine andere Form ausweisen.

Die erfindungsgemäßen, lichtlenkenden Strukturen werden im Weiteren auch ACPC (Advanced Compound Parabolic Concentrator) genannt.

Im Folgenden wird für Diffuserplatte oder Diffuserfolie auch der Ausdruck "flächenhafter Formkörper" verwendet.

Die vorliegende Erfindung betrifft weiterhin einen solchen flächenhaften Formkörper, dadurch gekennzeichnet, dass die Linsenbereiche und CPC-Bereiche jeweils identisch, abhängig oder unabhängig sind.

In einer Ausführungsform sind alle Linsenbereiche identisch und alle CPC-Bereiche identisch.

Die vorliegende Erfindung betrifft weiterhin einen solchen flächenhaften Formkörper, dadurch gekennzeichnet, dass die einzelnen Linsenbereiche und CPC-Bereiche durch unabhängige Parametersätze beschrieben werden können.

Die vorliegende Erfindung betrifft weiterhin einen solchen flächenhaften Formkörper, dadurch gekennzeichnet, dass der CPC-Bereich bestimmt werden kann durch:

a) Berechnen der Öffnungswinkel im Medium $\theta_1$ und $\theta_2$ aus den Fresnelschen Gleichungen mittels der definierten Akzeptanzwinkel;

b) Konstruktion des Parabelastes $P_1$ mit dem Öffnungswinkel im Medium $\theta_1$ und des Parabelastes $P_2$ mit dem Öffnungswinkel im Medium $\theta_2$ gemäß der Gleichung:

$$y_{1,2} = \frac{\left(x \mp \cos\theta_{1,2}\right)^2}{2\left(1 \mp \sin\theta_{1,2}\right)} - \frac{1 \pm \sin\theta_{1,2}}{2}$$

Wobei $\theta_{1,2}$ der Öffnungswinkel im Medium der linken ($\theta_1$) und rechten ($\theta_2$) Parabel, x die X-Koordinate, und $y_{1,2}$ die die Y-Koordinate der linken ($y_1$) und rechten ($y_2$) Parabel ist;

c) Berechnung der Endpunkte der Parabeläste $F_1$, $F_2$ und $E_1$, $E_2$;

d) Drehung des Parabelastes $P_1$ um den Öffnungswinkel im Medium $-\theta_1$ und des Parabelastes $P_2$ um den Öffnungswinkel im Medium $\theta_2$ und Translation der Parabelastes $P_2$ längs der x-Achse;

e) optional im Falle einer asymmetrischen Variante mit $\theta_1 \neq \theta_2$ Bestimmung der Neigung der durch die Punkte $E_1$ und $E_2$ bestimmten Neigungsfläche;

f) Bestimmung der effektiven Akzeptanzwinkel in Luft aus der in den Schritten a) bis e) konstruierten Geometrie;

g) Vergleich der effektiven Akzeptanzwinkel mit den definierten Akzeptanzwinkeln, und bei Abweichung größer 0,001% Wiederholung von Schritt a) bis f) mit korrigierten Akzeptanzwinkeln anstelle der definierten Akzeptanzwinkel in Schritt a), wobei die korrigierten Akzeptanzwinkeln ungleich sind den definierten Akzeptanzwinkeln, und wobei die korrigierten Akzeptanzwinkel so gewählt werden, dass die effektiven Akzeptanzwinkel aus Schritt f) mit den definierten Akzeptanzwinkeln übereinstimmen; und

h) beim Erreichen einer Abweichung der effektiven Akzeptanzwinkel von den definierten Akzeptanzwinkeln von 0,001% oder weniger Verkürzung der Parabeln in y-Richtung auf das durch den Verkürzungsfaktor bestimmte Maß.

Die vorliegende Erfindung betrifft weiterhin einen solchen flächenhaften Formkörper, dadurch gekennzeichnet, dass der definierte Akzeptanzwinkel $\theta_1$ zwischen 5° und 60° und dass der definierte Akzeptanzwinkel $\theta_2$ zwischen 5° und 60° liegt.

Die vorliegende Erfindung betrifft weiterhin einen solchen flächenhaften Formkörper, dadurch gekennzeichnet, dass in Schritt h) die Verkürzung einfaches Abschneiden ist.

Die vorliegende Erfindung betrifft weiterhin einen solchen flächenhaften Formkörper, dadurch gekennzeichnet, dass in Schritt h) die Verkürzung eine Stauchung der Geometrie entlang der y-Achse um den durch den Verkürzungsfaktor bestimmten Faktor ist.

Die vorliegende Erfindung betrifft weiterhin einen solchen flächenhaften Formkörper, dadurch gekennzeichnet, dass $\theta_1 = \theta_2$ ist.

Die vorliegende Erfindung betrifft weiterhin einen solchen flächenhaften Formkörper, dadurch gekennzeichnet, dass der Querschnitt der Linse eine Ellipse ist.

Die vorliegende Erfindung betrifft weiterhin einen solchen flächenhaften Formkörper, dadurch gekennzeichnet, dass die Gesamtperiode in einem Bereich zwischen 10 $\mu$m und 1mm, bevorzugt 30 $\mu$m - 500 $\mu$m,

besonders bevorzugt 50 $\mu$m - 300 $\mu$m liegt.

Die vorliegende Erfindung betrifft weiterhin einen solchen flächenhaften Formkörper, dadurch gekennzeichnet, dass der CPC-Bereich einen stetig polynomischen Abschluss aufweist. Dies bedeutet, dass sich die Struktur zwischen den beiden Punkten F1 und F2 eines CPC-Bereichs durch eine stetige polynomische Funktion beschreiben lässt. Die polynomische Funktion ist ein Polynom vierter Ordnung, der stetig differenzierbar in den Punkten $F_1$ und $F_2$ ist.

Die vorliegende Erfindung betrifft weiterhin einen solchen flächenhaften Formkörper, dadurch gekennzeichnet, dass, wenn der Querschnitt des Linsenbereichs eine Linse ist, der Polynom ein Polynom n-ter Ordnung ist, und wenn der Querschnitt des Linsenbereichs ein Kreis ist, der Polynom eine Ellipse ist, und wenn der Querschnitt des Linsenbereich ein gestauchter Kreis ist, der Polynom ein Polynom n-ter Ordnung ist.

Die vorliegende Erfindung betrifft weiterhin einen solchen flächenhaften Formkörper, dadurch gekennzeichnet, dass die Bereiche weniger als 5% oder zumindest weniger als 10% von einer der vorhergehend beschriebenen Geometrien abweicht.

Die vorliegende Erfindung betrifft weiterhin einen solchen flächenhaften Formkörper, dadurch gekennzeichnet, dass die Strukturen mindestens 80, 90, 95, oder 100% der Oberfläche der Vorderseite bedecken.

Die vorliegende Erfindung betrifft weiterhin einen solchen flächenhaften Formkörper, dadurch gekennzeichnet, dass der Formkörper auf der Rückseite eine Oberflächenstruktur mit Streuwirkung aufweist.

Die vorliegende Erfindung betrifft weiterhin einen solchen flächenhaften Formkörper, dadurch gekennzeichnet, dass der Formkörper auf der Rückseite eine UV-absorbierende Schicht enthält. Die vorliegende Erfindung betrifft weiterhin einen solchen flächenhaften Formkörper, dadurch gekennzeichnet, dass der Formkörper in der translationsinvarianten Richtung übermodulierte Strukturen aufweist, die eine zusätzliche Streuwirkung erzielen.

Die vorliegende Erfindung betrifft weiterhin einen solchen flächenhaften Formkörper, dadurch gekennzeichnet, dass der Formkörper transparenten Thermoplast, z.B. Polycarbonat, Polystyrol oder modifiziertes Polystyrol PMMA oder PET aufweist, oder Blends davon, insbesondere Polycarbonat. Bevorzugt hat der Formkörper eine Transmission > 90%, insbesondere 95%.

Die vorliegende Erfindung betrifft weiterhin die Herstellung eines solchen flächenhaften Formkörpers durch Extrusion, die Verwendung eines solchen flächenhaften Formkörpers als Diffuserplatte, eine Diffuserplatte, aufweisend einen solchen flächenhaften Formkörper und eine Backlight-Unit, aufweisend einen solchen flächenhaften Formkörper oder eine solche Diffuserplatte.

Die vorliegende Erfindung betrifft weiterhin die Herstellung eines solchen flächenhaften Formkörpers durch Extrusion, die Verwendung eines solchen flächenhaften Formkörpers als Diffuserfolie mit einer Dicke von

50μm bis 500μm.

Die Diffuserfolie kann auf einer erfindungsgemäßen Diffuserplatte oder einer beliebigen anderen Diffuserplatte in einer Backlight-Unit eingesetzt werden. Eine weitere Anwendung der Diffuserfolie oder auch der Diffuserplatte ist die Lichtstreuung in Beleuchtungskörpern wie z.B. LEDs, Leuchtstoffröhren oder OLEDs.

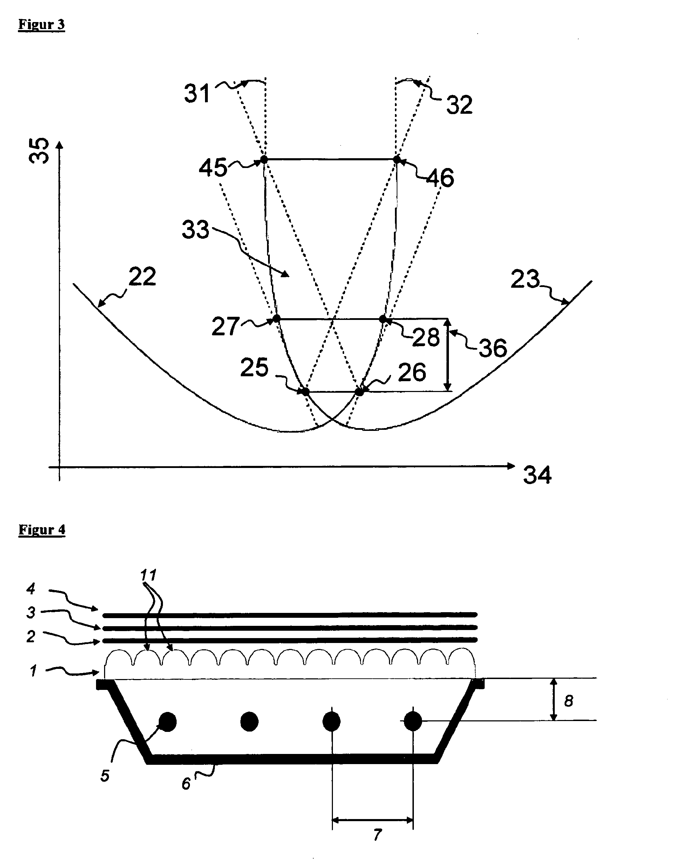

Der CPC Bereich folgt dem Design eines klassischen dielektrischen CPC (compound parabolic concentrator) mit dem Unterschied eines stetigen polynomischen Abschlusses (Polynom). Dielektrische CPCs werden klassischerweise als Konzentratorsysteme eingesetzt und basieren - im Gegensatz zu noch länger bekannten metallischen CPCs - auf dem optischen Prinzip der internen Totalreflexion. Zur mathematischen Bestimmung des CPC in der hier verwendeten Form sind die bestimmenden Parameter die beiden - hier meist identischen - Akzeptanzwinkel sowie der Verkürzungsfaktor. CPCs (Figur 3) werden nach folgender Vorgehensweise mit den genannten Formeln konstruiert. Bei der beschriebenen Vorgehensweise handelt es sich um ein implizites Optimierungsproblem:

1. Berechnen der Öffnungwinkel im Medium $\theta_1$ und $\theta_2$ (31 und 32) aus den Fresnelschen Gleichungen mittels der definierten Akzeptanzwinkel.

2. Konstruktion des Parabelastes $P_1$ (22) mit dem Öffnungswinkel im Medium $\theta_1$ (31) und des Parabelastes $P_2$ (23) mit dem Öffnungswinkel im Medium $\theta_2$ (32) gemäß der Gleichung:

$$y_{1,2} = \frac{(x \mp \cos\theta_{1,2})^2}{2(1 \mp \sin\theta_{1,2})} - \frac{1 \pm \sin\theta_{1,2}}{2}$$

3. analytische Berechnung der Endpunkte der Parabeläste $F_1, F_2$ und $E_1, E_2$ (25, 26, 45, 46)

4. Drehung des Parabelastes $P_1$ um den Öffnungswinkel im Medium $-\theta_1$ und des Parabelastes $P_2$ um den Öffnungswinkel im Medium $\theta_2$ und Translation der Parabel $P_2$ längs der x-Achse.

5. Im Falle der assymetrischen Variante mit $\theta_1 \neq \theta_2$ (31 und 32) wird nun die Neigung der durch die Punkte $E_1$ und $E_2$ bestimmten Neigungsfläche bestimmt.

6. Aus der Konstruktion werden die effektiven Akzeptanzwinkel in Luft bestimmt.

7. Vergleich mit den gewünschten Akzeptanzwinkeln. Bei zu geringer Übereinstimmung erneutes beginnen bei Punkt 1 mit angepassten Akzeptanzwinkeln.

8. Bei ausreichender Genauigkeit Verkürzung - einfaches Abschneiden - der Parabeln in y-Rich-tung auf das durch den Verkürzungsfaktor (36) bestimmte Maß mit den neuen Endpunkten $E_3$ und $E_4$ (27 und 28)

9. Ersetzen der durch die Punkte $F_1$ und $F_2$ (25, 26) begrenzten Kante durch eine Polynom n-ter Ordnung, das stetig differenzierbar angeschlossen wird.

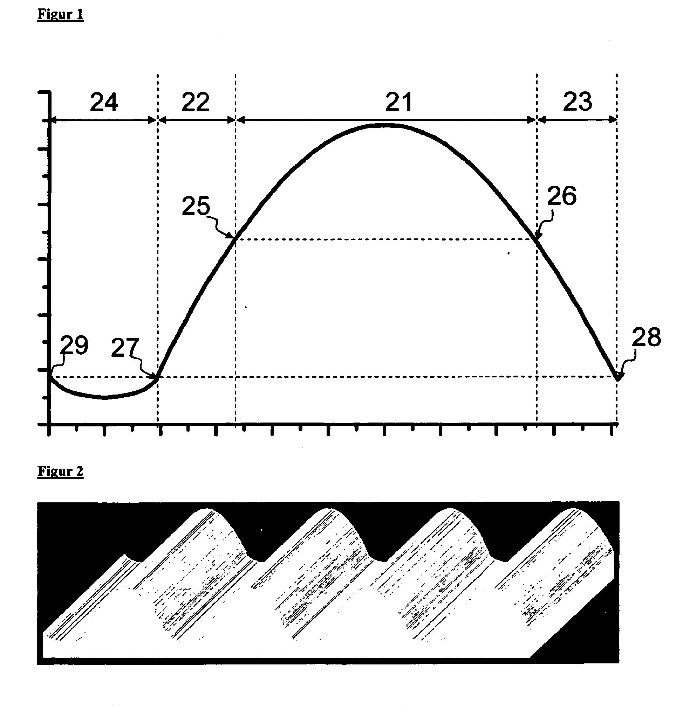

Im vorliegenden Fall werden die CPCs abweichend ihrer ursprünglichen Funktion eingesetzt. Passt man einen CPC so an, dass sein Akzeptanzwinkel $\theta_1$ und, $\theta_2$ (Figur 3) knapp unterhalb des Einfallswinkels des Lichtes auf die Diffuserplatte im Bereich zwischen zwei Lampen liegt, erhält man an dieser frei definierbaren Stelle eine Leuchtdichteerhöhung. Der so definierte CPC bestimmt den Bereich zwischen den Punkten 25 und 27 sowie zwischen den Punkten 26 und 28 in der Figur 1. Die CPCs können entweder symmetrisch mit den gleichen Öffnungswinkeln $\theta_1 = \theta_2$ oder asymmetrisch mit unterschiedlichen Öffnungswinkeln $\theta_1 \neq \theta_2$ ausgestattet sein.

Der Bereich Polynom zwischen den Punkten 25 und 26 in Figur 1 ist eine stetig angepasste Funktion. Diese ist ein Polynom vierter Ordnung, der stetig differenzierbar in den Punkten 25 und 26 ist.

Das Polynom zwischen den Punkten 25 und 26, in Kombination mit dem Linsenbereich (Lens) zwischen den Punkten 29 und 27 bestimmt Höhe und Breite eines Maximums im Bereich direkt über den Lampen. Die Leuchtdichte ist hier bei ebener Fläche in einem kleinen räumlichen Bereich sehr hoch, fällt aber steil ab. Die Zerstreuungswirkung der Linse in diesem Bereich führt zu einer Aufweitung und gleichzeitigen Absenkung dieses Maximums. Über die Krümmung des Bereiches lässt sich diese Aufweitung kontrollieren. Der bestimmende Parameter ist hier der normierte Fokus der Zerstreuungslinse. Die Linse kann nach folgenden Formeln berechnet werden: Sinusoidal, Ellipse, Kreis, Kreisbogenausschnitt. Bevorzugt ist eine Ellipse.

Der letzte Konstruktionsparameter ist das Verhältnis (Ratio) der beiden Teilbereiche 24 sowie die Summe aus 21, 22 und 23 zueinander. Über dieses Verhältnis lassen sich die Maxima zwischen den Lampen und direkt oberhalb der Lampen auf ein identisches Leuchtdichteniveau bringen. Je nachdem welche Funktion im Bereich Polynom verwendet wird, muss eine entsprechende Funktion im Bereich Lens verwendet werden. Bevorzugte Kombinationen sind in folgender Tabelle zusammengefasst:

| Lens | Polynom |
|---|---|
| Polynom n-ter Ordnung | Polynom n-ter Ordnung |
| Polynom n-ter Ordnung | sinusoidal |
| Gestauchter Kreis | Polynom n-ter Ordnung |

Durch eine Verdreifachung der Maxima im Vergleich zu einer Verdoppelung bei der herkömmlichen Lenticularstruktur ist die Homogenisierungswirkung im gleichen System ungleich größer. Zudem lässt sich die Position der Maxima, sowie ihre Breite und maximale Intensität getrennt voneinander anpassen. Dadurch ist die erfindungsgemäße Struktur auch für anspruchsvolle Backlight-Unit Aufbauten (z.B. weniger Lampen, dünnere Aufbauten) geeignet.

Die Struktur lässt sich über wenige Parameter mathematisch exakt beschreiben und auf das jeweilige Design der Backlight-Unit anpassen. Dadurch ist eine sehr homogene Hinterleuchtung bei gleichzeitig hoher Helligkeit möglich. Des Weiteren ist im Gegensatz zu herkömmlichen Systemen auf der Basis von Volumenstreuung der Effekt unabhängig von der Dicke der Platte, was einen zusätzlichen Freiheitsgrad in der Konstruktion bietet.

Die Struktur des CPCs, des Polynoms sowie des Lens-Bereiches lassen sich mit Abstrichen an der Homogenität der Helligkeit auch durch andere mathematische Funktionen annähern. Das kann eine Annäherung durch einzelne Geradenabschnitte sein, oder durch einen Polynom n-ter Ordnung oder andere dem Fachmann bekannte Funktionen.

Die vorliegende Erfindung ermöglicht es, in Backlight-Units mit einer reduzierten Anzahl von CCFLs (je nach Anwendung 4, 12, 14, 16 statt 20 oder 22 CCFLs in einem 42-Zoll LCD-Femseher) das Licht mit einer erfindungsgemäßen Diffuserplatte so homogen zu verteilen, dass Helligkeitsunterschiede minimiert werden und im fertigen Fernseher mit dem Auge nicht mehr wahrgenommen werden können. Die Grenze der Wahrnehmung von Helligkeitsunterschieden in Fernsehern ist in der Norm Semi D31-1102 (lamp mura) beschrieben.

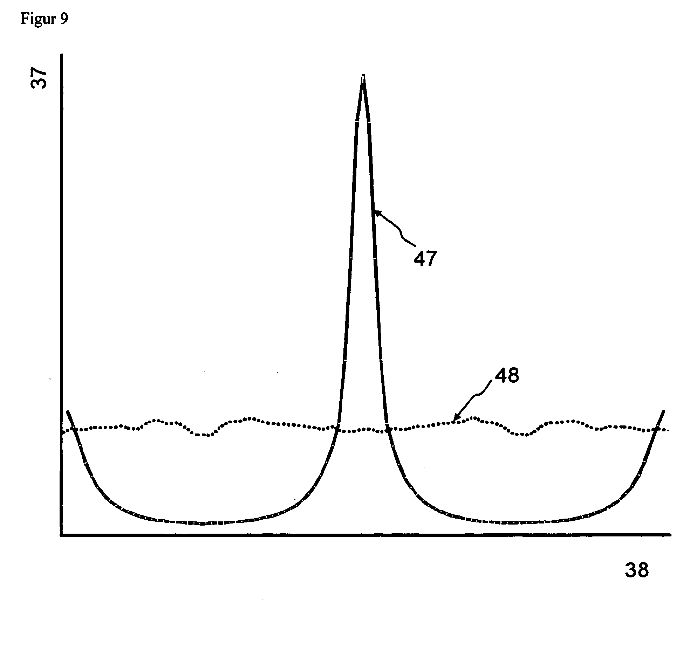

Die Erfindung wird durch die Abbildungen (Fig. 1 bis Fig. 10) weiter illustriert:

Fig. 1: Querschnitt durch eine lichtlenkende Struktur

Fig. 2: 3-D Illustration einer lichtlenkenden Struktur

Fig. 3: Konstruktionsprinzip eines Compound Parabolic Concentrators

Fig. 4: Querschnitt einer Backlight-Unit

Fig. 5: Brightness-Verteilung nach Beispiel 1

Fig. 6: Brightness-Verteilung nach Beispiel 2

Fig. 7: Querschnitt durch eine lichtlenkende Struktur

Fig. 8: Querschnitt durch eine lichtlenkende Struktur nach Beispiel 3

Fig. 9: Brightness-Verteilung nach Figur 7

Fig. 10: Brightness-Verteilung nach Beispiel 4

Hierbei bedeuten die Referenzzeichen:

1 Lichtlenkende Streuplatte
2 Diffuser Folie
3 Prismenfolie BEF
4 Reflexionspolarisatorfolie DBEF
5 CCFL
6 Reflektierende Rückseite
7 Abstand der CCFLs zueinander
8 Abstand CCFL zur lichtlenkenden Streuplatte
11 CPC Strukturen auf der lichtlenkenden Streuplatte
21 Polynombereich der lichtlenkenden Struktur
22 linker CPC-Bereich (Parabel $P_1$) der lichtlenkenden Struktur
23 rechter CPC-Bereich (Parabel $P_2$) der lichtlenkenden Struktur
24 Lens-Bereich der lichtlenkenden Struktur
25 Oberer Endpunkt $F_1$ des CPC
26 Oberer Endpunkt $F_2$ des CPC
27 Unterer Endpunkt $E_3$ des CPC
28 Unterer Endpunkt $E_4$ des CPC
29 linker Endpunkt $L_1$ des Lens-Bereiches
31 Öffnungswinkel $\theta_1$ der Parabel $P_1$
32 Öffnungswinkel $\theta_2$ der Parabel $P_2$
33 CPC Körper
34 X-Koordinate
35 Y-Koordinate
36 Durch den Abschneidefaktor bestimmte Verkürzung des CPC Körpers
37 Brightness (in senkrechter Aufsicht auf die BLU)
38 Position auf der Backlight-Unit (orthogonal zu den Lampen)
39 Brightness-Verteilung der Lampen ohne jegliche Maßnahme bezogen auf Beispiel 1
40 Brightness-Verteilung bei einem Aufbau wie im Vergleichsbeispiel 1
41 Brightness-Verteilung bei einem Aufbau wie im Beispiel 1
42 Brightness-Verteilung bei einem Aufbau wie im Vergleichsbeispiel 2
43 Brightness-Verteilung der Lampen ohne jegliche Maßnahme bezogen auf Beispiel 2
44 Brightness-Verteilung bei einem Aufbau wie im Beispiel 2
45 Unterer Endpunkt $E_1$ des unverkürzten CPC
46 Unterer Endpunkt $E_2$ des unverkürzten CPC
47 Brightness-Verteilung der Lampen ohne jegliche Maßnahme bezogen auf Beispiel 3
48 Brightness-Verteilung bei einem Aufbau wie im Beispiel 3
49 Brightness-Verteilung der Lampen ohne jegliche Maßnahme bezogen auf Beispiel 4
50 Brightness-Verteilung bei einem Aufbau wie im Beispiel 4

In bestimmten Fällen erhöht eine zusätzliche Oberflächenstruktur mit Streuwirkung auf der Vorderseite und / oder der Rückseite diesen Effekt noch.

Der Effekt der Homogenisierung der Lichtverteilung kann durch zusätzlich eingebrachte Streuteilchen noch erhöht werden. Normalerweise wird die Wirkung einer lichtlenkenden Struktur wie der ACPC Struktur durch die Streuung von kleinen Streuteilchen aufgehoben, so dass nur die Streuung der Streuteilchen als einziger Effekt bleibt. Zusätzlich wurde überraschenderweise gefunden, dass bei geringer Konzentration der Streuteilchen die Homogenisierung des Lichtes deutlich verbessert wird.

Die Streuteilchen können polymere oder anorganische Teilchen sein. Als Streuteilchen kommen eine Vielzahl unterschiedlicher Stoffe in Frage, wie z.B. anorganische oder organische Materialien. Diese können weiterhin in fester, flüssiger oder auch gasförmiger Form vorliegen.

Beispiele für anorganische Stoffe sind z.B. salzartige Verbindungen wie Titandioxid, Zinkoxid, Zinksulfid, Bariumsulfat etc. aber auch amorphe Materialien wie anorganische Gläser.

Beispiele für organische Stoffe sind Polyarylate, Polymethacrylate, Polytetrafluoroethylen, Polytrialkyloxysiloxane. Die Streuteilchen können polymere Teilchen auf Acrylatbasis mit einer Kern-Schale-Morphologie sein. Es handelt sich dabei beispielsweise und bevorzugt um solche, wie sie in EP-A 634 445 offenbart werden.

Beispiele für gasförmige Materialien können Inertgase wie Stickstoff, Edelgase aber auch Luft oder Kohlendioxid sein. Wie werden unter Druck in der Polymerschmelze "gelöst" und zum Formkörper z. B. durch Extrusionsverfahren verarbeitet. Beim Abkühlen/Entspannen des Formkörpers bilden sie dann Gasblasen.

Diese Streuteilchen können weiterhin unterschiedlichste Geometrien aufweisen, von kugeliger Form bis hin zu geometrischen Formen, wie sie Kristalle darstellen. Übergangsformen sind ebenfalls möglich. Es ist ferner möglich, dass diese Streuteilchen über ihren Querschnitt unterschiedliche Brechungsindices besitzen, z.B. resultierend aus Beschichtungen der Streuteilchen oder resultierend aus Kern-Schale-Morphologien.

Die Streuteilchen sind nützlich, um dem Polycarbonat Lichtstreueigenschaften zu erteilen. Der Brechungsindex n der Streuteilchen liegt bevorzugt innerhalb von +/-0,25 Einheiten, mehr bevorzugt innerhalb +/-0,18 Einheiten, am meisten bevorzugt innerhalb +/-0,12 Einheiten des Brechungsindexes des Polycarbonats. Der Brechungsindex n der Streuteilchens liegt bevorzugt nicht näher als +/-0,003 Einheiten, mehr bevorzugt nicht näher als +/-0,01 Einheiten, am meisten bevorzugt nicht näher als +/-0,05 Einheiten bei dem Brechungsindex des Polycarbonats. Der Brechungsindex wird entsprechend der Norm ASTM D 542-50 und/oder DIN 53 400 gemessen.

Die Streuteilchen haben im allgemeinen einen Durchschnittteilchendurchmesser von wenigstens 0,5 Mikrometer, bevorzugt von wenigstens 2 Mikrometer, mehr bevorzugt von 2 bis 50 Mikrometer, am meisten bevorzugt von 2 bis 15 Mikrometer. Unter "Durchschnittsteilchendurchmesser" ist der Zahlendurchschnitt zu verstehen. Bevorzugt haben wenigstens 90 %, am meisten bevorzugt wenigstens 95 % der Streuteilchen einen Durchmesser von mehr als 2 Mikrometer. Die Streuteilchen sind bevorzugt ein freifließendes Pulver.

In einer Herstellung werden die Streuteilchen in das Basismaterial der erfindungsgemäßen Diffuserplatte eingebracht, wobei die lichtlenkende Struktur auf der Vorderseite als dünne Schicht aus einem transparenten Kunststoff ohne Streuteilchen hergestellt wird. In einer anderen Herstellung werden die Streuteilchen in einer dünnen Schicht auf der Rückseite der Diffuserplatte aufgebracht. Diese dünnen Schichten werden bevorzugt durch Koextrusion hergestellt. Die dünnen Schichten können auch durch Lackierung aufgebracht werden, wobei der Lack Streuteilchen enthält.

Die Streuteilchen im Basismaterial werden in einer Konzentration von 0.001 bis 0.1% bevorzugt von 0.01% bis 0.2% eingesetzt. Die Streuteilchen in der dünnen Schicht auf der Rückseite werden in einer Konzentration von 0.1% bis 10%, bevorzugt von 0.5 % bis 5% eingesetzt.

Die erfindungsgemäßen Diffuserplatten mit den lichtlenkenden ACPC Strukturen werden durch Extrusion, Spritzguss, Spritzprägen, Heißprägen, Kaltprägen oder Hochdruckverformung hergestellt, bevorzugt durch Extrusion. Bei der Extrusion ist die erfindungsgemäße Struktur in einer der Walzen vorhanden. Die Struktur kann durch Ultrapräzisionsfräsen, Laserbearbeitung, chemische Strukturierung, Photolithographie oder anderen dem Fachmann bekannten Technologien auf die Walze aufgebracht werden.

Die Diffuserplatten können weiterhin mehrere Schichten aufweisen, eine Mittelschicht und gegebenenfalls weitere Schichten auf der Vorderseite und/oder auf der Rückseite.

Die Mittelschicht sorgt im wesentlichen für die Steifigkeit und Wärmeformbeständigkeit der Platte. Für den Fall, dass keine Schicht auf der Vorderseite verwendet wird, wird die Struktur in die Mittelschicht eingeprägt. Die Schicht auf der Vorderseite dient im wesentlichen zur Strukturabbildung. Die Schicht auf der Rückseite dient zum Schutz der Mittelschicht z.B. hinsichtlich Vergilbung durch einen UV-Schutz. Sie kann ferner auch zusätzliche Streufunktion besitzen, die ihrerseits durch eine Oberflächenstrukturierung oder durch Zusatz von Streupigmenten erreicht wird.

Die Dicke der Diffuserplatten liegt zwischen 0.2 mm und 5 mm, bevorzugt von 1 mm bis 3 mm, besonders bevorzugt von 1 mm bis 1.5 mm. Die Flächenausdehnung ist bevorzugt zwischen 10cm$^2$ und 2m$^2$.

Neben der Anwendung in einer Backlight-Unit können die erfindungsgemäßen Diffuserplatten mit ACPC Struktur auch zur Homogenisierung der Helligkeit von großflächigen Beleuchtungen eingesetzt werden.

## Beispiele

### Beispiel 1

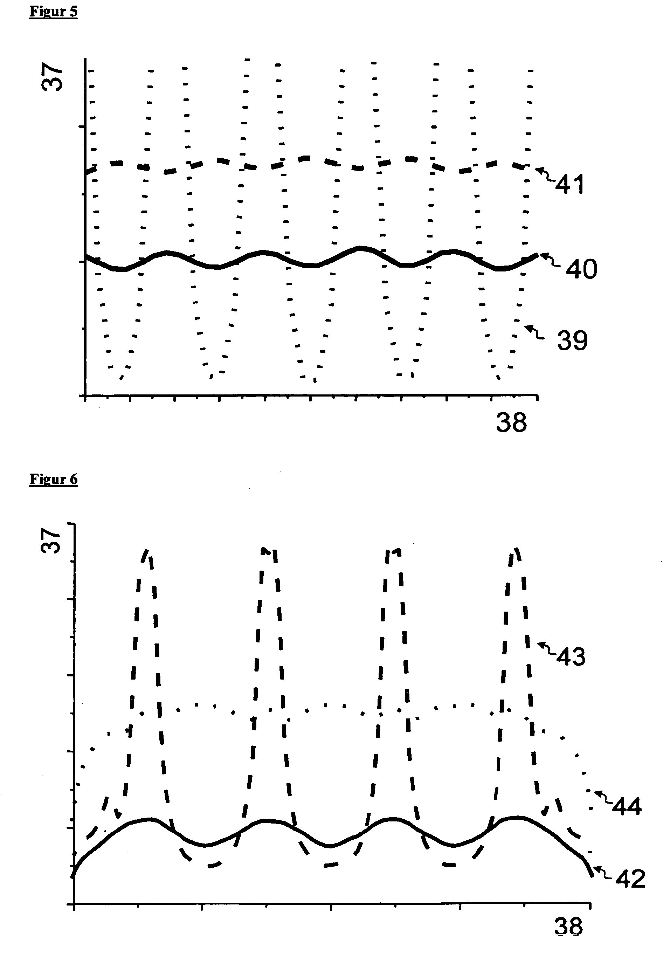

Eine 32" Backlight-Unit mit einem Lampenmittelpunktsabstand von 19.8mm, einem Lampendurchmesser von 3mm und einem Abstand Diffuserplatte-Lampe von 6.1 mm wird vorgelegt. Auf die Backlight-Unit wird eine Diffuserplatte aus Makrolon® OD 2015 (Polycarbonat optischer Qualität mit einem MVR von 16,5cm$^3$/10min nach ISO 1133 bei 250°C und 2,16 kg, einer Glasübergangstemperatur von 145°C nach ISO 11357-1,-2 und 10°C/min, VICAT-Erweichungstemperatur von 145°C nach ISO 306 bei 50N und 50 oder 120°C/h, einem Brechungsindex von 1,584 nach ISO 489 und Methode A sowie einer Lichttransmission von >89% nach ISO 13468-2 bei 550nm und 1mm und >90% bei 800nm und 1mm, Bayer MaterialScience, Leverkusen, Deutschland) mit einer Dicke von 1 mm und mit einer ACPC Struktur mit folgenden Parametern gelegt: Akzeptanzwinkel: 8°, Verkürzungsfaktor: 0.05, Polymer: Polycarbonat, Lens-Struktur: gestauchter Halbkreis (Faktor 2), Ratio: 0,2, wobei sich auf der Rückseite der Platte zusätzlich eine stochastische Struktur mit einem Streuöffnungshalbwertshalbwinkel von 5° befindet. Mit diesem Aufbau erhält man eine Helligkeitsschwankung von 3,7% zum Mittelwert. Eine Grafik ist in Figur 5 gezeigt.

### Vergleichsbeispiel 1

Eine 32" Backlight-Unit mit einem Lampenmittelpunktsabstand von 19.8mm, einem Lampendurchmesser von 3mm und einem Abstand Diffuserplatte-Lampe von 6.1 mm wird vorgelegt. Auf die Backlight-Unit legt man eine Diffuserplatte aus Makrolon® OD 2015 mit einer Dicke von 2 mm und mit einem Streumittelgehalt von 5%. Mit diesem Aufbau erhält man eine Helligkeitsschwankung von 7,5% zum Mittelwert. Eine Grafik ist in Figur 5 gezeigt.

### Beispiel 2

Eine 32" Backlight-Unit mit einem Lampenmittelpunktsabstand von 96mm, einem Lampendurchmesser von 15mm und einem Abstand Diffuserplatte- Lampe von 18mm wird vorgelegt. Auf die Backlight-Unit legt man eine Diffuserplatte aus Makrolon® OD 2015 mit einer Dicke von 1 mm und mit einer ACPC Struktur mit folgenden Parametern: Akzeptanzwinkel: 8°, Verkürzungsfaktor: 0.05, Polymer: Polycarbonat, Lens-Struktur: gestauchter Halbkreis (Faktor 4), Ratio: 0,2. Mit diesem Aufbau erhält man eine Helligkeitsschwankung von 7,7% zum Mittelwert. Eine Grafik ist in Figur 6 gezeigt.

### Vergleichsbeispiel 2

Eine 32" Backlight-Unit mit einem Lampenmittelpunktsabstand von 96mm, einem Lampendurchmesser von 15mm und einem Abstand Diffuserplatte- Lampe von 18mm wird vorgelegt. Auf die Backlight-Unit legt man eine Diffuserplatte aus Makrolon® OD 2015 mit einer Dicke von 2 mm und mit einem Streumittelgehalt von 5%. Mit diesem Aufbau erhält man eine Helligkeitsschwankung von 35% zum Mittelwert. Eine Grafik ist in Figur 6 gezeigt.

Wie der Figur 5 und Figur 6 zu entnehmen ist, schwankt die Helligkeit bei den Vergleichsbeispielen deutlich stärker als bei dem erfindungsgemäßen Diffuserplatte mit ACPC Struktur. Zudem ist die mittlere Helligkeit deutlich höher.

### Beispiel 3

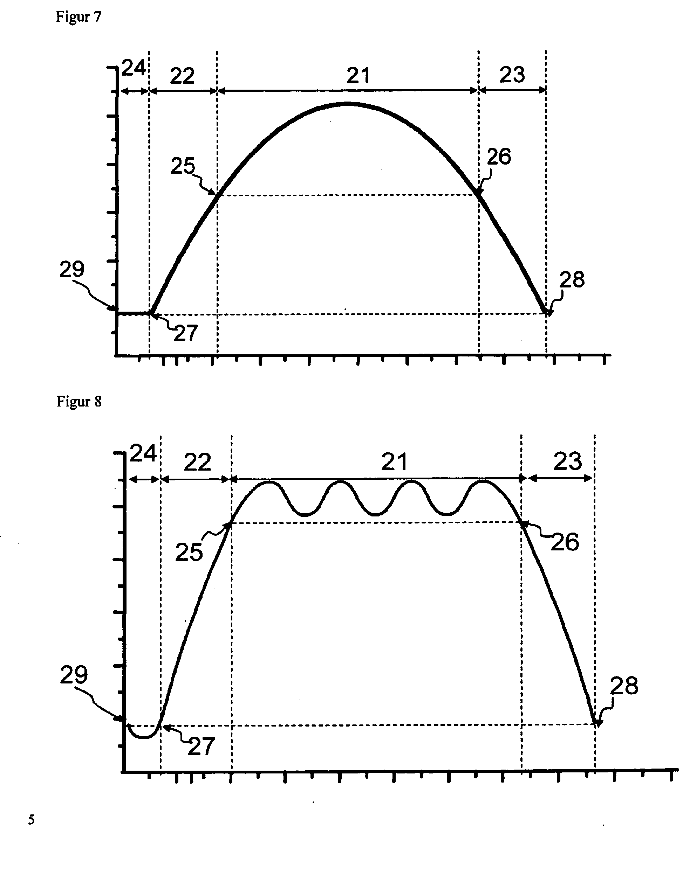

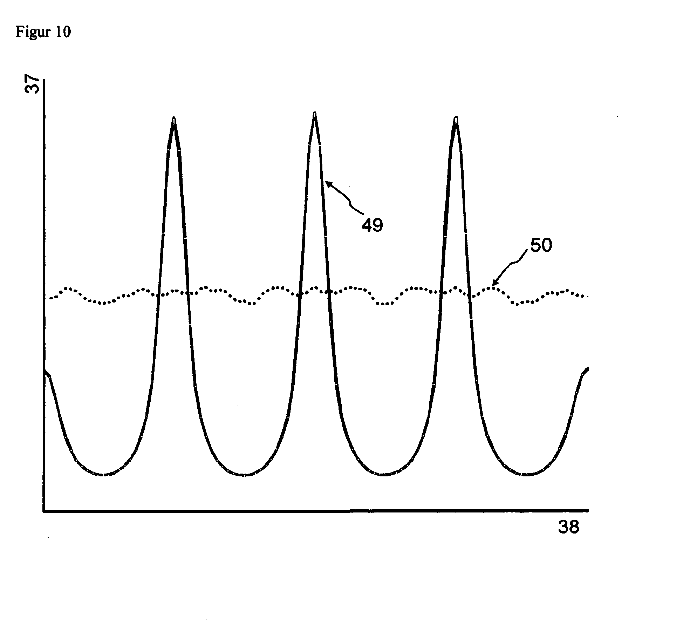

Eine 32" Backlight-Unit mit einem Lampenmittelpunktsabstand von 26mm, einem Lampendurchmesser von 3.4mm und einem Abstand Diffuserplatte- Lampe von 3.4mm wird vorgelegt. Auf die Backlight-Unit legt man eine Diffuserplatte aus Makrolon® OD 2015 mit einer Dicke von 1,2 mm und mit einer ACPC Struktur mit folgenden Parametern: Akzeptanzwinkel: 8°, Verkürzungsfaktor: 0,05, Polymer: Polycarbonat, Lens-Struktur: gestauchter Halbkreis (Faktor 2), Ratio: 0,07, Polynombereich: abschnittsweise definierte Polynome 9. Ordnung (vgl. Figur 8). Mit diesem Auf-bau erhält man eine Helligkeitsschwankung von 2,2% zum Mittelwert. Eine Grafik ist in Figur 10 gezeigt.

In Beispiel 3 ist gezeigt, wie mit einer ACPC Struktur, die genau auf die Geometrie einer Backlight-Unit angepasst ist, die Helligkeitsschwankung auf unter 4% reduziert werden kann

## Patentansprüche

1. Diffuserplatte oder Diffuserfolie zur Verwendung in einer Backlight-Unit, aufweisend eine Vorderseite mit im Wesentlichen translationsinvarianten lichtlenkenden Strukturen und eine Rückseite, wobei die Rückseite dafür vorgesehen ist, einer Lichtquelle zugewandt und die Vorderseite einer Lichtquelle abgewandt positioniert zu sein, **dadurch gekennzeichnet, dass** die lichtlenkenden Strukturen im Querschnitt bestehen aus

   - einem konvexen compound parabolic concentrator Bereich, CPC-Bereich (22,23), bestehend aus einem ersten und zweiten Parabelast, jeweils mit einem oberen (25,26) und einem unteren (27,28) Endpunkt, wobei die unteren Endpunkte näher zur Rückseite liegen,
   - einer Struktur (21) zwischen den oberen Endpunkten des CPC- Bereiches, die den CPC Abschluss bildet und die sich durch eine polynomische Funktion vierter Ordnung, die in den beiden oberen Endpunkten stetig differenzierbar ist, beschreiben lässt, und

- einen sinusoidalen, elliptischen, kreisförmigen oder kreisbogenausschnittförmigen Linsenbereich (24), der sich an einem der unteren Endpunkte (27, 28) anschließt.

**2.** Diffuserplatte oder Diffuserfolie nach Anspruch 1, **dadurch gekennzeichnet, dass** diese in der translationsinvarianten Richtung übermodulierte Strukturen aufweist, die eine zusätzliche Streuwirkung erzielen.

**3.** Diffuserplatte oder Diffuserfolie gemäß Anspruch 1 oder 2, enthaltend Polycarbonat, Polystyrol oder modifiziertes Polystyrol.

**4.** Diffuserplatte nach Anspruch 1 bis 3, wobei diese eine Dicke zwischen 0,2 mm und 5 mm aufweist.

**5.** Diffuserplatte nach Anspruch 4, wobei diese eine Dicke von 1 mm bis 1,5 mm aufweist.

**6.** Diffuserfolie nach Anspruch 1 bis 3, wobei diese eine Dicke von 50 μm bis 500 μm aufweist.

**7.** Backlight-Unit, enthaltend eine Diffuserplatte nach einem der Ansprüche 1 bis 5.

**8.** Backlight-Unit, enthaltend Diffuserfolie nach einem der Ansprüche 1 bis 3 oder 6.

**Claims**

**1.** Diffuser plate or diffuser film for use in a backlight unit, having a front side with substantially translation-invariant light-guiding structures, and a rear side, the rear side being intended for being positioned facing towards a light source and the front side being intended for being positioned facing away from a light source, **characterized in that** the light-guiding structures consist in cross section of

- a convex compound parabolic concentrator region (CPC region (22, 23), consisting of a first and second parabola branch, respectively with an upper end point (25, 26) and a lower end point (27, 28), the lower end points lying closer to the rear side,
- a structure (21) between the upper end points of the CPC region, which forms the CPC termination and can be described by a polynomial function of the fourth order that is continuously differentiable at the two upper end points, and
- a sinusoidal, elliptical, circular or circular-arcsegmental lens region (24), which adjoins one of the lower end points (27, 28).

**2.** Diffuser plate or diffuser film according to Claim 1, **characterized in that** it has structures overmodulated in the translation-invariant direction, which achieve an additional scattering effect.

**3.** Diffuser plate or diffuser film according to Claim 1 or 2, containing polycarbonate, polystyrene or modified polystyrene.

**4.** Diffuser plate according to Claims 1 to 3, this plate having a thickness of between 0.2 mm and 5 mm.

**5.** Diffuser plate according to Claim 4, this plate having a thickness of 1 mm to 1.5 mm.

**6.** Diffuser film according to Claims 1 to 3, this film having a thickness of 50 μm to 500 μm.

**7.** Backlight unit, including a diffuser plate according to one of Claims 1 to 5.

**8.** Backlight unit, including diffuser film according to one of Claims 1 to 3 or 6.

**Revendications**

**1.** Plaque de diffusion ou feuille de diffusion pour l'utilisation dans une unité de rétroéclairage, présentant un côté avant avec des structures guidant la lumière essentiellement invariantes en translation et un côté arrière, le côté arrière étant prévu pour être positionné vers une source de lumière et le côté avant étant prévu pour être positionné de manière détournée d'une source de lumière, **caractérisée en ce que** les structures guidant la lumière se composent, en section transversale,

- d'une région convexe CPC (concentrateurs paraboliques composés) (22, 23) constituée d'une première et d'une deuxième branche parabolique, à chaque fois avec un point d'extrémité supérieur (25, 26) et un point d'extrémité inférieur (27, 28), les points d'extrémité inférieurs étant situés plus près du côté arrière,
- d'une structure (21) entre les points d'extrémité supérieurs de la région CPC, qui forme la terminaison CPC et qui se décrit par une fonction polynomiale du quatrième ordre qui peut être différenciée de manière continue dans les deux points d'extrémité supérieurs, et
- d'une région de lentille (24) sinusoïdale, elliptique, circulaire ou en forme de section d'arc de cercle qui se raccorde à l'un des points d'extrémité inférieurs (27, 28).

**2.** Plaque de diffusion ou feuille de diffusion selon la revendication 1, **caractérisée en ce que** celle-ci présente des structures surmodulées dans la direction invariante en translation, lesquelles produisent un effet de diffusion supplémentaire.

**3.** Plaque de diffusion ou feuille de diffusion selon la revendication 1 ou 2, contenant du polycarbonate, du polystyrène ou du polystyrène modifié.

**4.** Plaque de diffusion selon les revendications 1 à 3, celle-ci présentant une épaisseur comprise entre 0,2 mm et 5 mm.

**5.** Plaque de diffusion selon la revendication 4, celle-ci présentant une épaisseur de 1 mm à 1,5 mm.

**6.** Feuille de diffusion selon les revendications 1 à 3, celle-ci présentant une épaisseur de 50 $\mu$m à 500 $\mu$m.

**7.** Unité de rétroéclairage, contenant une plaque de diffusion selon l'une quelconque des revendications 1 à 5.

**8.** Unité de rétroéclairage contenant une feuille de diffusion selon l'une quelconque des revendications 1 à 3 ou 6.

**Figur 1**

**Figur 2**

**Figur 3**

**Figur 4**

**Figur 5**

**Figur 6**

Figur 7

Figur 8

Figur 9

Figur 10

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 634445 A
- US 20040066645 A
- DE 102005039413
- JP 2006284697 A

- US 200610262666 A
- CN 1924620
- US 2007047260 A
- US 2006250819 A